# FASCICULE DE BREVET EUROPEEN

(11) **EP 0 689 769 B1**
(45) Date de publication et mention de la délivrance du brevet: **01.09.1999**
(21) Numéro de dépôt: 94110063.8
(22) Date de dépôt: 29.06.1994
(51) Int. Cl.: A23K 1/10, A23K 1/18

(54) **Produit alimentaire fermenté pour animaux**
Fermentiertes Futtermittel
Fermented animal feed

(43) Date de publication de la demande: 03.01.1996
(73) Titulaire: SOCIETE DES PRODUITS NESTLE S.A., 1800 Vevey (CH)
(72) Inventeur: Gaier, Walter, CH-1801 Le Mont-Pelerin (CH)
(74) Mandataire: Wavre, Claude-Alain

(56) Documents cités:
- EP-A- 0 241 097
- EP-A- 0 303 477
- EP-A- 0 346 909
- WO-A-88/00439
- FR-A- 2 314 671
- US-A- 3 115 409
- DATABASE WPI Week 8624, Derwent Publications Ltd., London, GB; AN 86-154984 & SU-A-1 194 371 (E SIBE TECHN INST) 30 Novembre 1985

## Description

La présente invention a pour objet un procédé de préparation d'un produit alimentaire fermenté pour animaux, ainsi que le produit issu du procédé.

On sait qu'un mélange émulsionné de viande finement divisée, par exemple par broyage, tend à se séparer et à produire me phase lipidique, me phase aqueuse et des sédiments protéiques. C'est pourquoi, pour fabriquer traditionnellement des pâtés de viande, on ajoute un ou plusieurs additifs à une émulsion de viande, par exemple des phosphates ou des protéines de plasma sanguin, de manière à stabiliser et homogénéiser cette émulsion.

D'un autre coté, FR 2314671 décrit un procédé, dans lequel on fermente par des bactéries lactiques un mélange pasteurisé comprenant du lait en poudre, des morceaux de viande cuits et un agent gélifiant, par exemple de la gélatine, de manière à stabiliser le gel au stockage et à le rendre microbiologiquement stable.

La présente invention a pour but de proposer un procédé de préparation d'un nouveau produit émulsionné, pasteurisé et fermenté à base de viande ou de poisson, qui permette de ne pas utiliser à la fois un additif pour stabiliser l'émulsion et un agent gélifiant pour l'épaissir.

A cet effet, dans le procédé de préparation d'un produit alimentaire fermenté pour animaux selon la présente invention, on pasteurise, en homogénéisant constamment, un mélange finement divisé et émulsionné comprenant au moins me matière collagénique, une matière protéique et du lait, puis on le fermente par des bactéries lactiques.

De préférence, le mélange finement divisé et émulsionné comprend au moins 1-35% d'une matière collagénique, 10-50% d'une matière protéique et du lait jusqu'à une teneur totale en eau de 50-95%.

De plus, le produit issu du procédé selon la présente invention est également l'objet de l'invention.

Le procédé objet de l'invention présente ainsi l'avantage que l'on n'utilise pas d'additifs pour stabiliser le mélange émulsionné, ni d'agents gélifiant pour l'épaissir. En effet, cette émulsion est entretenue constamment, ce qui permet de la stabiliser et donc d'éviter une séparation de ses constituants. De plus, du collagène est extrait des matières collagéniques lors de la pasteurisation, ce qui concourt à épaissir le mélange émulsionné et aussi à le stabiliser lors de la fermentation. Enfin, cette fermentation suivie du refroidissement du mélange à des températures de conservation de 4 à 25°C par exemple, permet également la stabilisation durable du mélange émulsionné qui ne présente alors aucune séparation de ses constituants.

De même, la texture du produit fermenté selon la présente invention présente l'avantage d'être particulièrement fine et aérée, grâce à l'action combinée de l'homogénéisation constante du mélange et de sa fermentation par les bactéries lactiques. En outre, le goût du produit se distingue de celui de produits traditionnels à base de viande ou de poisson tels que des produits de type pâté, par exemple. Le produit selon la présente invention est ainsi particulièrement attractif pour des animaux familiers, par exemple des chiens ou des chats, et peut l'être encore plus si on le combine avec des produits solides classiquement utilisés pour la nutrition animale, par exemple des morceaux de viande ou de poisson, et/ou des céréales extrudées et/ou des protéines extrudées, par exemple.

En outre, le produit selon la présente invention présente l'avantage d'être stable dans son goût, sa texture, et ses qualités microbiologiques, pendant au moins 3 mois dans des conditions classiques de conservation de produits alimentaires pasteurisés et emballés, à des températures de l'ordre de 4 à 25°C, par exemple.

Enfin, ce produit peut être réalisé avec des matières premières peu chères ou destinées classiquement à être jetées.

Dans la suite de la description, on entend par "matière protéique" tout tissu protéique comestible, solide, ordinairement insoluble, notamment les viandes traditionnelles, y compris le poisson ou la volaille, les abats, ou d'autres sources de protéines animales, par exemple.

De même, on entend par "matière collagénique" tout tissu solide comprenant en majeur partie du collagène, notamment de l'os, des couennes, du cartilage, des tendons, des arêtes de poisson, par exemple.

En outre, on entend également par "solides de lait", du lait en poudre et/ou des composés du lait purifiés et séchés, notamment du petit lait en poudre ou un perméat de petit lait en poudre, par exemple.

Enfin, l'expression "teneur totale en eau" signifie la quantité d'eau contenue dans tous les constituants du mélange, pouvant donc être du lait, de la viande et des os, par exemple.

Pour mettre en oeuvre le présent procédé, on prépare donc premièrement un mélange finement divisé et émulsionné comprenant du lait, une matière collagénique et une matière protéique.

Ces matières collagénique et protéique peuvent être soit distinctes, par exemple du foie et/ou de la viande pour les protéines, et des os et/ou du cartilage pour la matière collagénique, soit comprises dans une même masse, par exemple une carcasse d'animal, ou le cou et/ou le gésier d'un poulet qui comprennent mêlées des os, du cartilage, des tendons, des couennes et de la viande, par exemple.

On préfère ainsi broyer premièrement les matières collagéniques et protéiques, qui peuvent donc être distinctes ou mêlées, ajouter ensuite me quantité de lait entier ou écrémé jusqu'à une teneur totale en eau recherchée, puis remuer le tout suffisamment pour émulsionner le mélange. Finalement, cette émulsion finement divisée peut comprendre, après broyage, des morceaux de matière d'une taille inférieure à 1 mm, par exemple, et au moins 1-35% d'me matière collagénique, 10-50% d'une matière protéique et du lait jusqu'à une teneur totale en eau de 50-95%, par exemple.

On peut également remplacer le lait entier ou écrémé du mélange par 1-10% de solides de lait en poudre et de l'eau jusqu'à une teneur en eau totale de 50-95%. De préférence, on utilise ainsi du lait en poudre et/ou du petit lait en poudre et/ou encore un perméat de petit lait en poudre, par exemple.

De même, les matières collagéniques et protéiques peuvent avoir été préalablement pasteurisées, stérilisées ou congelées avant d'être broyées pour préparer le mélange émulsionné, comme cela peut être nécessité par les réglementations courantes en alimentation ou bien exigé pour parvenir à des normes de sécurité microbiologiques désirables. On peut également ajouter au mélange divisé et émulsionné des agents antimycotiques, des colorants, des sucres, des sels, des vitamines, des antioxydants, des agents conservateurs, des épices, des arômes et autres adjuvants, par exemple.

Dans un deuxième temps, pour mettre en oeuvre le présent procédé, on pasteurise cette émulsion dans des conditions classiques de pasteurisation, notamment en chauffant à 70-100°C pendant 1 à 60 min, par exemple. Il est également important d'homogénéiser constamment cette émulsion de manière à éviter une séparation de ses différents constituants et aussi à favoriser l'extraction du collagène des matières collagéniques. Pour cela, on préfère homogénéiser le mélange par un dispositif muni de pâles coupantes tournant rapidement.

Enfin, dans un troisième temps, on fermente le mélange pasteurisé par des bactéries lactiques. On peut cependant aussi ajouter aux bactéries lactiques des microorganismes habituellement utilisés pour fermenter des produits carnés, tel que *Staphylococcus carnosus* ou *Micrococcus varians*, par exemple.

On peut ainsi inoculer le mélange pasteurisé avec une préculture fraîche de chaque microorganisme utilisé et/ou avec une préculture fraîche comprenant un mélange des microorganismes utilisés. Le milieu de préculture peut être, par ailleurs, un milieu de nutrition synthétique habituellement utilisé pour la culture en laboratoire de ces microorganismes. On envisage donc toutes les possibilités d'inoculation avec une ou plusieurs précultures fraîches, comprenant chacune une ou plusieurs souches de microorganismes pouvant être d'un genre ou d'une espèce différente. L'inoculum de chaque préculture fraîche est de plus ajouté en une quantité qui dépend de la durée nécessaire à la fermentation pour atteindre le pH final, et de la ou des souches de microorganismes utilisées. De préférence, on inocule ainsi le mélange pasteurisé à raison de 10⁶ à 10⁷ cfu/g (cfu est l'abréviation anglaise de "colony forming units").

Pour des bactéries lactiques, le milieu de préculture est de préférence un milieu à base de lait tel que le milieu MSK comprenant du lait écrémé en poudre reconstitué à 10% et 1/10000 parties d'un extrait de levure commercial, par exemple. On peut ainsi préparer cette préculture fraîche en réalisant plusieurs précultures successives des souches initialement congelées ou lyophilisées, et ensuite inoculer le mélange pasteurisé avec la dernière préculture, généralement la troisième, prise à partir du stade de coagulation du milieu de préculture.

Enfin, on peut aussi inoculer le mélange directement avec une quantité de microorganismes lyophilisés ou congelés qui dépend de la durée nécessaire à la fermentation pour atteindre un pH désiré et de la ou des souches de microorganismes utilisées.

On peut choisir les bactéries lactiques, seuls ou en combinaison, dans le groupe formé par les streptocoques, les lactocoques, les lactobacilles et les pédiocoques, notamment *Lactococcus lactis subsp. lactis*, *Lactococcus lactis subsp. cremoris, Lactococcus lactis subsp. lactis biovar diacetylactis, Streptococcus thermophilus, Lactobacillus acidophilus, Lactobacillus helveticus, Lactobacillus delbrueckii* notamment *Lactobacillus delbrueckii subsp. bulgaricus*, *Lactobacillus casei subsp*. *casei*, *Lactobacillus plantarum, Lactobacillus fermentum, Pediococcus pentasaceus*, *Pediococcus acidilactici*, *Lactobacillus sake, Lactobacillus curvatus,* par exemple (Bergey's Manual of Systematic Bacteriology, vol 1, 1984; vol 2, 1986). Il faut remarquer que certains de ces microorganismes sont mésophiles, et peuvent donc fermenter le mélange à des températures comprises entre 20 et 45°C, par exemple.

Enfin, on peut également utiliser une des souches *Lactobacillus delbrueckii subsp. bulgaricus* lac(-) décrites dans EP 0518096 qui présentent une délétion dans le gène βgal, de manière à réduire la post acidification du mélange après fermentation. Pour cela, on peut ajouter une quantité minime de glucose au mélange avant fermentation, par exemple 0,1-2%, de manière à stopper la fermentation après épuisement du glucose. On peut aussi fermenter une de ces souches lac(-) en combinaison avec une souche commerciale *Streptococcus thermophilus*, de manière à diminuer également la post acidification du produit.

Pour mettre en oeuvre le présent procédé, on peut refroidir le mélange avant de lui ajouter l'inoculum de bactéries lactiques, et on peut également l'homogénéiser constamment pendant ce temps de refroidissement. On peut ainsi pasteuriser le mélange à 80-90°C pendant 1-20 min, le refroidir tout en l'homogénéisant constamment, puis le fermenter par des bactéries lactiques à 20-45°C jusqu'à un pH de 4-4,5, par exemple.

De même, on peut ajouter au mélange divisé et émulsionné et/ou au mélange pasteurisé et/ou au mélange fermenté des morceaux choisis seuls ou en combinaison, dans le groupe formé par de la viande, du poisson, des protéines extrudées, et des céréales extrudées, par exemple. Ces morceaux peuvent d'ailleurs être préalablement pasteurisés, et avoir une taille qui ne dépasse pas plus de 5 cm³, par exemple.

Finalement, on peut conditionner le mélange dans des récipients en matière plastique, avant de le laisser fermenter jusqu'au pH désiré. Le récipient scellé peut être ainsi conservé après fermentation pendant au moins 3 mois à température ambiante, c'est à dire jusqu'à 25°C, sans pour autant que le produit conservé ne perde ses qualités de texture et de goût. On peut également à nouveau pasteuriser les récipients remplis, si l'on désire une conservation de plus de 6 mois.

Dans un premier mode particulier de mise en oeuvre du présent procédé, pour obtenir un produit versable selon la présente invention, c'est à dire un produit capable de s'écouler malgré sa consistance visqueuse, on peut utiliser dans le présent procédé un mélange finement divisé et émulsionné, comprenant au moins 1-10% d'une matière collagénique, 10-25% d'une matière protéique, et du lait ou 1-10% de solides de lait en poudre et de l'eau, jusqu'à une teneur totale en eau de 75-95%.

On trouve ainsi que le produit préparé de cette manière particulière peut être versé malgré sa consistance visqueuse, et présente un arôme de viande ou de poisson frais qui est attractif pour les animaux familiers. Ce produit peut être utilisé comme boisson pour ces animaux.

Dans un deuxième mode particulier de mise en oeuvre du présent procédé, pour obtenir un produit selon la présente invention ayant l'aspect traditionnel d'un pâté de viande ou de poisson, on utilise dans le présent procédé un mélange finement divisé et émulsionné comprenant au moins 10-35% d'une matière collagénique, 20-50% d'une matière protéique, du lait ou 1-10% de solides de lait en poudre et de l'eau, jusqu'à une teneur totale en eau de 60-85%.

On trouve ainsi que le produit préparé de cette manière particulière, a un aspect de pâté de viande ou de poisson frais qui est particulièrement attractif pour les animaux familiers, et cela d'autant plus si ces produits comprennent des morceaux de viande ou de poissons et/ou de céréales extrudées et/ou de protéines extrudées.

De préférence, ces protéines et céréales extrudées sont enrobées d'un adjuvant hydrophobe de manière à ce qu'elles ne ramollissent pas et qu'elles conservent un caractère croquant pendant la période de conservation du produit. Ces adjuvants peuvent ainsi être toutes graisses ou huiles connues comme par exemple de l'huile de palme hydrogénée, ou encore des cires comme par exemple de la cire d'abeille.

Le procédé selon la présente invention est décrit plus en détails dans les exemples présentés ci-après à titre d'illustration. Les pourcentages y sont donnés en poids.

### Exemple 1

On prépare un produit fermenté et versable à base de viande, comme boisson pour animaux familiers. Ce produit comprend les ingrédients suivants:
- 10% de foie de porc
- 5% de poitrines de poulet
- 5% de gésiers de poulet
- 0,8% de lait en poudre
- 0,8% de perméat de petit lait en poudre
- 78,4% d'eau
On broie ainsi finement le mélange de poulet dans un broyeur classique (Stephan, Allemagne), on ajoute à ce dernier le foie, puis on lui ajoute le reste des ingrédients. Le mélange émulsionné et divisé comprend finalement des particules de matière ayant une taille inférieure à 1 mm, et environ 18% de matière protéique (viande, foie), 2% de matière collagénique, 1,6% de solides de lait et une teneur en eau totale de 85%.

Ensuite, on chauffe le mélange dans le broyeur à 85°C pendant 13 min, tout en homogénéisant constamment ce dernier. En fait, la température du mélange atteint 85°C au bout de 8 min de chauffage. Puis, on le refroidit jusqu'à 42°C tout en l'homogénéisant constamment.

Finalement, on inocule ce dernier mélange à raison de 0,1% de deux précultures fraîches dans un milieu MSK comprenant respectivement une souche *Lactobacillus delbruekii subsp. bulgaricus* et une souche *Streptococcus thermophilus* traditionnellement utilisées pour la préparation de yogourt. On homogénéise ensuite le tout pendant 1 min, on verse le mélange dans des récipients en plastiques que l'on scelle, puis on les incube à 40°C jusqu'à ce que le pH du mélange atteigne environ 4,5. On refroidit alors ces récipients jusqu'à 12°C pour arrêter la fermentation.

On conserve alors une partie des récipients à 20°C pendant 1 semaine, une autre partie pendant 1 mois et le reste pendant 3 mois. Chaque produit présente au bout de ces périodes le même arôme et la même texture. De plus, le pH du produit conservé 3 mois est d'environ 4,1. Enfin, les chiens et les chats acceptent sans difficultés de laper cette boisson épaisse.

### Exemple 2

On réalise la même boisson que celle décrite dans l'exemple 1, à la différence que l'on fermente le mélange jusqu'à un pH d'environ 4,5, par 0,1% d'une culture fraîche dans un milieu MSK comprenant, en mélange, 75% d'une souche *Streptococcus thermophilus* commerciale et 25% de la souche *Lactobacillus bulgaricus* CNCM I-1067 décrite dans EP 0518096.

Le produit conservé pendant 3 mois à 20°C présente les mêmes propriétés que celles décrites pour les produits conservés de l'exemple 1, mais un pH sensiblement moins acide, de l'ordre de 4,35.

### Exemple 3

On prépare une boisson pour animaux familiers à base de lait écrémé. Les ingrédients sont les suivants:
- 10% de foie de porc
- 5% de poitrines de poulet
- 5% de gésiers de poulet
- 80% de lait écrémé
On réalise l'émulsion, la pasteurisation et la fermentation de la même manière que celle décrite à l'exemple 1, et avec les mêmes souches bactériennes. La boisson est ensuite conservée à 20°C pendant 3 mois. Le goût et la texture du produit après conservation sont similaires à ceux des produits conservés décrits dans les exemples 1 et 2.

### Exemple 4

On prépare un produit fermenté à base de viande ayant l'aspect et la texture d'un pâté de viande traditionnel. Ce produit comprend les ingrédients suivants:
- 20% de foie de porc,
- 40% d'un mélange de poulet (33% de pieds et de pattes, 25% de poitrines, 16,5% de carcasses, 16,5% de gésiers et 9% de cous)
- 0,8% de lait en poudre,
- 0,8% de perméat de petit lait en poudre,
- 40% d'eau
On hache ainsi finement le mélange de poulet avec la moitié de l'eau qui est sous forme de glaçons de manière à refroidir le dispositif "hache-viande". On transfert ensuite le tout dans un broyeur, on lui ajoute après le foie, puis le reste des ingrédients. Le mélange émulsionné comprend finalement des particules de matière ayant une taille inférieure à 1 mm, et environ 40% de matière protéique (viande, foie), 20% de matière collagénique (os, cartilage, tendons), 1,6% de solides de lait et une teneur totale en eau de 75%.

On chauffe, on refroidit et on fermente le mélange de la même manière que celle décrite à l'exemple 1, et avec les mêmes souches bactériennes.

On conserve enfin une partie des récipients à 20°C pendant 1 semaine, une autre partie pendant 1 mois, et le reste pendant 3 mois. Chaque pâté présente au bout de ces périodes le même arôme et la même texture. De plus, le pH du produit conservé 3 mois est d'environ 4,15. Enfin, les chiens et les chats acceptent particulièrement bien de manger ces pâtés de viande.

### Exemple 5

On réalise le même pâté que celui décrit dans l'exemple 4, à la différence près que l'on ajoute au mélange pasteurisé 0,3% de glucose, et que l'on fermente le mélange jusqu'à épuisement du glucose, c'est à dire jusqu'à un pH d'environ 4,5, par 0,1% d'une préculture fraîche comprenant la souche *Lactobacillus delbrueckii subsp. bulgaricus* CNCM I-1067 décrite dans EP 0518096.

Le produit conservé pendant 3 mois à 20°C, présente les mêmes propriétés que celles décrites pour les produits conservés de l'exemple 4, mais présente cependant un pH sensiblement moins acide de l'ordre de 4,45.

### Exemple 6

On prépare un pâté de viande pour animaux familiers à base de lait écrémé. Les ingrédients sont les suivants:
- 20% de foie de porc
- 60% du mélange de poulet décrit à l'exemple 4
- 20% de lait écrémé
On réalise l'émulsion, la pasteurisation et la fermentation comme décrit à l'exemple 4, et avec les mêmes souches bactériennes. Le pâté est ensuite conservé sous emballage pendant 3 mois. Le goût et la texture du produit après conservation sont similaires à ceux du produit décrit dans les exemples 4 et 5.

### Exemple 7

On prépare le même pâté de viande que celui décrit dans l'exemple 4, à la différence près qu'on ajoute au mélange pasteurisé avant fermentation des morceaux de viande cuits ayant une taille moyenne d'environ 2 cm³.

### Exemple 8

On prépare le même pâté de viande que celui décrit à l'exemple 4, à la différence près qu'on ajoute au mélange pasteurisé, à la fin de la fermentation et lors du refroidissement, des morceaux de protéines extrudées, pasteurisées et enrobées de cire d'abeille, et que l'on verse seulement ensuite le mélange dans des récipients que l'on scelle. Ces morceaux de protéines, traditionnellement utilisées pour la nutrition animale, conservent alors leur caractère croquant pendant au moins 3 mois sous emballage et à une température de 20°C.

### Exemple 9

On prépare un pâté de poisson de la même manière que celle décrite à l'exemple 4, et avec les mêmes souches bactériennes. Ce pâté comprend alors 20% d'abats de poisson, 30% de têtes, 10% de queues, 0,8% de lait en poudre, 0,8% de perméat de petit lait en poudre, et 40% d'eau.

### Exemple 10

On prépare le même pâté de viande que celui décrit dans l'exemple 4, à la différence près qu'on inocule directement le mélange pasteurisé, comprenant en outre 300 ppm de sels de nitrites, avec deux starters lyophilisés comprenant respectivement une souche commerciale de *Lactobacillus sake* et une souche commerciale de *Staphylococcus carnosus,* et qu'on fermente le mélange à 30°C jusqu'à un pH d'environ 4,5.

La texture du produit est similaire à celle du produit de l'exemple 4. Le goût est cependant quelque peu différent, mais particulièrement attractif pour des chiens ou des chats. Enfin, la couleur du produit est classiquement rouge, due à l'action de *Staphylococcus carnosus.*

### Exemple 11

On prépare le même pâté de viande que celui décrit à l'exemple 4, à la différence près qu'on inocule le mélange pasteurisé comprenant en outre 300 ppm de sels de nitrites, avec deux starters lyophilisés comprenant respectivement une souche commerciale de *Lactococcus lactis* et une souche commerciale de *Micrococcus varians*, et qu'on fermente le mélange à 30°C jusqu'à un pH d'environ 4,5.

La texture et le goût du produit sont similaires à ceux du produit de l'exemple 10. Enfin, la couleur du produit est classiquement rouge, due à l'action de *Micrococcus varians*.

## Revendications

1. **.** Procédé de préparation d'un produit alimentaire fermenté pour animaux, dans lequel on pasteurise, en homogénéisant constamment, un mélange finement divisé et émulsionné comprenant au moins une matière collagénique, une matière protéique et du lait, puis on le fermente par des bactéries lactiques.

2. Procédé selon la revendication 1, dans lequel le mélange finement divisé et émulsionné comprend au moins 1-35% d'une matière collagénique, 10-50% d'une matière protéique et du lait jusqu'à une teneur totale en eau de 50-95%.

3. Procédé selon la revendication 2, dans lequel on pasteurise le mélange à 80-90°C pendant 1-20 min, on le refroidit tout en homogénéisant constamment, puis on le fermente par des bactéries lactiques à 20-45°C jusqu'à un pH de 4-4,5.

4. Procédé selon la revendication 2, dans lequel le mélange comprend au moins 10-35% d'une matière collagénique, 20-50% d'une matière protéique, et du lait jusqu'à une teneur totale en eau de 60-85%.

5. Procédé selon la revendication 2, dans lequel le mélange comprend au moins 1-10% d'une matière collagénique, 10-25% d'une matière protéique, et du lait jusqu'à une teneur totale en eau de 75-95%.

6. Procédé selon la revendication 1, dans lequel on ajoute au mélange émulsionné, pasteurisé ou fermenté, des morceaux choisis seuls ou en combinaison, dans le groupe formé par de la viande, du poisson, des protéines extrudées, et des céréales extrudées.

7. Procédé selon la revendication 1, dans lequel les bactéries lactiques sont choisies, seules ou en combinaison, dans le groupe formé par les streptocoques, les lactobacilles, les lactocoques et les pédiocoques.

8. Procédé selon les revendications 1 et 7, dans lequel on fermente le mélange par un mélange de bactéries lactiques et de microorganismes fermentant classiquement les matières carnées, notamment *Staphylococcus carnosus* et *Micrococcus varians.*

9. Procédé selon l'une des revendications 2, 4 et 5, dans lequel on remplace le lait par 1-10% de solides de lait en poudre et de l'eau jusqu'à une teneur en eau totale de 50-95%.

10. Produit alimentaire obtenu par le procédé selon l'une des revendications 1 à 9.

## Claims

1. Process for preparing a fermented food product for animals, wherein a finely divided and emulsified mixture comprising at least one collagen-based material, a proteinaceous material and milk is pasteurized while being continuously homogenized, and is then fermented by lactic bacteria.

2. Process according to claim 1, wherein the finely divided and emulsified mixture comprises at least 1-35 % of a collagen-based material, 10-50 % of a proteinaceous material and milk to a total water content of 50-95 %.

3. Method according to claim 2, wherein the mixture is pasteurized at 80-90°C for 1-20 min, the whole is cooled while being continuously homogenized and is then fermented by lactic bacteria at 20-45°C to a pH of 4-4.5.

4. Method according to claim 2, wherein the mixture comprises at least 10-35 % of a collagen-based material, 20-50 % of a proteinaceous material and milk to a total water content of 60-85 %.

5. Method according to claim 2, wherein the mixture comprises at least 1-10 % of a collagen-based material, 10-25 % of a proteinaceous material and milk to a total water content of 75-95 %.

6. Method according to claim 1, wherein pieces are added to the pasteurized or fermented emulsified mixture, alone or in combination, selected from the group formed of meat, fish, extruded proteins and extruded cereals.

7. Process according to claim 1, wherein the lactic bacteria are selected, alone or in combination, from the group formed of streptococci, lactobacilli, lactococci and paediococci.

8. Process according to claims 1 and 7, wherein the mixture is fermented by a mixture of lactic bacteria and micro-organisms conventionally fermenting meat-based materials, in particular *Staphylococcus carnosus* and *Micrococcus varians*.

9. Process according to one of claims 2, 4 and 5, wherein milk is replaced by 1-10 % powdered milk solids and water to a total water content of 50-95 %.

10. Food product obtained by the process according to one of claims 1 to 9.

## Patentansprüche

1. Verfahren zur Herstellung eines fermentierten Nahrungsmittels für Tiere, bei man dem eine fein verteilte und emulgierte Mischung, die wenigstens ein Kollagenmaterial, ein proteinisches Material und Milch umfaßt, unter ständigem Homogenisieren pasteurisiert, wonach man sie mit Milchsäurebakterien fermentiert.

2. Verfahren nach Anspruch 1, bei dem die fein verteilte und emulgierte Mischung wenigstens 1-35% eines Kollagenmaterials, 10-50% eines proteinischen Materials und Milch bis zu einem Gesamtwassergehalt von 50-95% umfaßt.

3. Verfahren nach Anspruch 2, bei dem man die Mischung bei 80-90°C innerhalb von 1-20 min pasteurisiert, die gesamte Mischung unter ständigem Homogenisieren abkühlt, wonach man sie mit Milchsäurebakterien bei 20-45°C bis auf einen pH-Wert von 4-4,5 fermentiert.

4. Verfahren nach Anspruch 2, bei dem die Mischung wenigstens 10-35% eines Kollagenmaterials, 20-50% eines proteinischen Materials und Milch bis zu einem Gesamtwassergehalt von 60-85% umfaßt.

5. Verfahren nach Anspruch 2, bei dem die Mischung wenigstens 1-10% eines Kollagenmaterials, 10-25% eines proteinischen Materials und Milch bis zu einem Gesamtwassergehalt von 75-95% umfaßt.

6. Verfahren nach Anspruch 1, bei dem man der emulgierten, pasteurisierten oder fermentierten Mischung Stücke, die einzeln oder in Kombination aus der Gruppe ausgewählt sind, die von Fleisch, Fisch, extrudierten Proteinen und extrudierten Getreideprodukten gebildet wird, hinzufügt.

7. Verfahren nach Anspruch 1, bei dem die Milchsäurebakterien einzeln oder in Kombination aus der Gruppe, die von den Streptokokken, den Lactobazillen, den Lactokokken und den Pediokokken gebildet wird, ausgewählt sind.

8. Verfahren nach den Ansprüchen 1 und 7, bei dem man die Mischung mit einer Mischung aus Milchsäurebakterien und Mikroorganismen, die klassischerweise Fleischstoffe fermentieren, insbesondere *Staphylococcus carnosus* und *Micrococcus varians*, fermentiert.

9. Verfahren nach einem der Ansprüche 2, 4 und 5, bei dem man die Milch durch 1-10% festes Milchpulver und Wasser bis zu einem Gesamtwassergehalt von 50-95% ersetzt.

10. Nahrungsmittel, erhalten nach dem Verfahren nach einem der Ansprüche 1 bis 9.
